# EUROPÄISCHE PATENTSCHRIFT

(11) **EP 0 927 909 B1**
(45) Veröffentlichungstag und Bekanntmachung des Hinweises auf die Patenterteilung: **30.07.2003**
(21) Anmeldenummer: 98120387.0
(22) Anmeldetag: 28.10.1998
(51) Int. Cl.: G03B 17/30

(54) **Kleinbildwechselmagazin**
Small format film exchangeable magazine
Magazin échangeable pour films de petit format

(30) Priorität: 31.12.1997 DE 19758326
(43) Veröffentlichungstag der Anmeldung: 07.07.1999
(73) Patentinhaber: Rollei Fototechnic GmbH, 38126 Braunschweig (DE)
(72) Erfinder: Weidmann, Björn, 38106 Braunschweig (DE)
(74) Vertreter: Gramm, Werner, Prof. Dipl.-Ing.

(56) Entgegenhaltungen:
- US-A- 4 168 896
- US-A- 4 281 913
- US-A- 4 556 301
- US-A- 4 705 375

## Beschreibung

Die Erfindung betrifft ein Kleinbildwechselmagazin mit einer Aufnahme für eine Filmpatrone, einer Stachelwalze für den Filmtransport, einer Wickeltrommel und einem Schieber zum Verschließen des im Magazingehäuse vorgesehenen Filmfensters.

Der Erfindung liegt die Aufgabe zugrunde, ein derartiges Magazin in möglichst kompakter Bauform zu entwickeln.

Ausgehend von dem eingangs beschriebenen Kleinbildwechselmagazin wird diese Aufgabe erfindungsgemäß dadurch gelöst, daß die Stachelwalze bei eingelegter Filmpatrone sich unmittelbar hinter dem Patronenmaul in einem lichten Abstand befindet, der kleiner ist als das Querformat des Filmfensters, wobei die Filmführung für den unbelichteten, zuvor im Prewind-Verfahren komplett auf die Wickeltrommel gespulten Film, dessen Wickelsinn auf der Wickeltrommel identisch ist mit dem des Spulenkörpers der Filmpatrone, von der dicht neben der Filmpatrone angeordneten Wickeltrommel in einem großen Radius um die Aufnahme fur die Filmpatrone herum in die Ebene des Filmfensters verläuft mit einer anschließenden 180°-Umlenkung um die Stachelwalze in das Patronenmaul.

Dabei kann die Stachelwalze - in Winding-Richtung des Films gesehen - unmittelbar hinter der Andruckplatte liegen, deren Ebene angenähert tangential zur Stachelwalze liegt.

Ferner ist es zweckmäßig, wenn in Winding-Richtung des Films gesehen unmittelbar vor dem Filmfenster eine Umlenkrolle, vorzugsweise mit einer Andruckrolle, für einen wölbungsfreien Filmeinlauf in die Bildebene vorgesehen ist, in der sich der Film auf einer Andruckplatte abstützt.

Die Stachelwalze schiebt den Film zunächst um 180° über den eigenen Durchmesser durch das Filmfenster, worauf der Film in einem großen Bogen um die Filmpatrone herumgeführt und dann von der Wickeltrommel mit Hilfe eines üblichen Mechanismus gefangen wird. Die Wickeltrommel wird dabei mit einer höheren Umfangsgeschwindigkeit angetrieben als die Stachelwalze, die daher zusätzlich über einen Freilauf verfügt. Der zunächst im Prewind-Verfahren komplett auf die Wickeltrommel gespulte Film wird dann für die einzelnen Filmaufnahmen von der Wickeltrommel über den genannten großen Radius um die Filmpatrone herum wölbungsfrei in das Bildfenster transportiert, so daß keine die Planlage gefährdenden Filmprägungen entstehen können. Für diesen Rücktransport des Films in die Filmpatrone muß ausschließlich die Filmpatronenspule angetrieben werden.

Das erfindungsgemäße Magazin erlaubt eine automatische Filmeinfädelung, wobei gleichzeitig für den Film die allgemein üblichen Planlageforderungen erreicht werden und eine kompakte Bauweise ermöglicht wird.

Weitere Merkmale der Erfindung sind Gegenstand der Unteransprüche und werden in Verbindung mit weiteren Vorteilen der Erfindung anhand eines Ausführungsbeispieles näher erläutert.

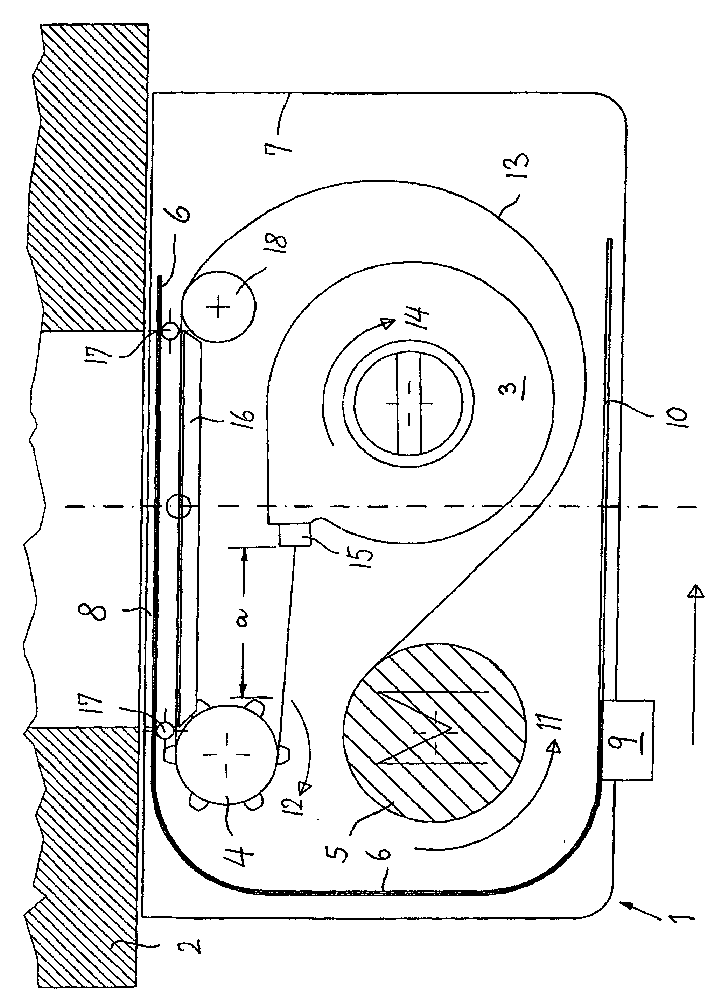

In der Zeichnung ist eine als Beispiel dienende Ausführungsform der Erfindung schematisch dargestellt.

Die Figur zeigt einen Horizontalschnitt durch ein Kleinbildwechselmagazin, das in seiner Gesamtheit mit dem Bezugszeichen 1 versehen ist. Das an einen Kamerakörper 2 angesetzte Kleinbildwechselmagazin 1 umschließt eine Aufnahme für eine Filmpatrone 3, eine Stachelwalze 4 für den Filmtransport, eine Wickeltrommel 5 sowie einen Schieber 6 zum Verschließen des im Magazingehäuse 7 vorgesehenen Filmfensters 8.

Der Schieber 6 besteht aus einem biegeelastischen Schieberblech, das durch manuelle Betätigung eines mit ihm verbundenen Schiebergriffes 9 entlang eines Schieberkanals 10 verschiebbar ist. Die Figur zeigt den Schieber 6 in seiner Schließstellung in der das Kleinbildwechselmagazin 1 von dem Kamerakörper 2 abgenommen werden kann und separat handhabbar ist.

Zur Durchführung des Prewind-Verfahrens ist die Wickeltrommel 5 mit einem Motor bzw. eigenen Antrieb bestückt, durch dessen Betätigung der unbelichtete Film aus der Filmpatrone 3 herausgezogen und in der mit einem Pfeil 11 symbolisierten Prewind-Richtung auf die Wickeltrommel 5 aufgewickelt wird. Die Prewind-Richtung der Stachelwalze 4 ist mit dem Pfeil 12 angegeben. Dabei ist der Wickeltrommel-Antrieb für das Prewind-Verfahren so ausgelegt, daß er der Wickeltrommel 5 eine gegenüber der Stachelwalze 4 höhere Umfangsgeschwindigkeit verleiht; die Stachelwalze 4 ist daher mit einem Freilauf versehen. Für den Rücktransport des Films 13 in die Filmpatrone 3 wird ausschließlich die Filmpatrone 3 von einem Antrieb beaufschlagt und zwar in der mit dem Pfeil 14 symbolisierten Winding-Richtung.

Die Filmführung für den unbelichteten, zuvor im Prewind-Verfahren komplett auf die Wickeltrommel 5 gespulten Film 13 erfolgt von der dicht neben der Filmpatrone 3 angeordneten Wickeltrommel 5 in einem großen Radius um die Filmpatrone 3 herum in die Ebene des Filmfensters 8 mit einer anschließenden 180°-Umlenkung um die Stachelwalze 4 in das Patronenmaul 15 der Filmpatrone 3.

Dabei wird der Film 13 im Bereich des Filmfensters 8 rückseitig von einer Andruckplatte 16 und auf seiner dem Kamerakörper 2 zugewandten Seite von je einer am Beginn sowie am Ende des Filmfensters 8 angeordneten Andruckrolle 17 beaufschlagt. Unmittelbar vor der Andruckplatte 16 ist noch eine Umlenkrolle 18 vorgesehen, die einen wölbungsfreien Filmeinlauf in die Bildebene sicherstellt.

Die Zeichnung läßt erkennen, daß sich die Stachelwalze 4 unmittelbar hinter dem Patronenmaul 15 in einem lichten Abstand a befindet, der kleiner ist als das Querformat des Filmfensters 8. Die Zeichnung läßt ferner erkennen, daß die Stachelwalze 4 unmittelbar hinter der Andruckplatte 16 liegt, deren Ebene angenähert tangential zur Stachelwalze 4 liegt.

Vor der Wickeltrommel 5 kann noch eine in der Zeichnung nicht näher dargestellte Film-Fangeinrichtung vorgesehen sein.

## Patentansprüche

1. Kleinbildwechselmagazin mit einer Aufnahme für eine Filmpatrone (3), einer Stachelwalze (4) für den Filmtransport, einer Wickeltrommel (5) und einem Schieber (6) zum Verschließen des im Magazingehäuse (7) vorgesehenen Filmfensters (8), **dadurch gekennzeichnet, daß** die Stachelwalze (4) bei eingelegter Filmpatrone sich unmittelbar hinter dem Patronenmaul (15) in einem lichten Abstand (a) befindet, der kleiner ist als das Querformat des Filmfensters (8), wobei die Filmführung für den unbelichteten, zuvor im Prewind-Verfahren komplett auf die Wickeltrommel (5) gespulten Film (13), dessen Wickelsinn auf der Wickeltrommel (5) identisch ist mit dem des Spulenkörpers der Filmpatrone (3), von der dicht neben der Filmpatrone (3) angeprdpeten Wickeltrommel ( 5 ) in einem großen Radius um die Aufnahme für die Filmpatrone (3) herum in die Ebene des Filmfensters (8) verläuft mit einer anschließenden 180°-Umlenkung um die Stachelwalze (4) in das Patronenmaul (15).

2. Kleinbildwechselmagazin nach Anspruch 1, **dadurch gekennzeichnet, daß** vor der Wickeltrommel (5) eine Film-Fangeinrichtung vorgesehen ist.

3. Kleinbildwechselmagazin nach Anspruch 1 oder 2, **dadurch gekennzeichnet, daß** für das Prewind-Verfahren ein Wickeltrommel-Antrieb vorgesehen ist, der der Wickeltrommel (5) eine gegenüber der mit einem Freilauf versehenen Stachelwalze (4) höhere Umfangsgeschwindigkeit verleiht.

4. Kleinbildwechselmagazin nach Anspruch 1, 2 oder 3, **dadurch gekennzeichnet, daß** für den Rücktransport des Films (13) in die Filmpatrone (3) ausschließlich die Filmpatrone (3) von einem Antrieb beaufschlagt ist.

5. Kleinbildwechselmagazin nach einem der vorhergehenden Ansprüche, **dadurch gekennzeichnet, daß** in Winding-Richtung des Films (13) gesehen unmittelbar vor dem Filmfenster (8) eine Umlenkrolle (18) für einen wölbungsfreien Filmeinlauf in die Bildebene vorgesehen ist, in der sich der Film (13) auf einer Andruckplatte (16) abstützt.

6. Kleinbildwechselmagazin nach Anspruch 5, **dadurch gekennzeichnet, daß** mit der Umlenkrolle (18) eine Andruckrolle (17) unmittelbar vor dem Filmfenster (8) vorgesehen ist.

7. Kleinbildwechselmagazin nach Anspruch 5 oder 6, **dadurch gekennzeichnet, daß** die Stachelwalze (4) unmittelbar hinter der Andruckplatte (16) liegt, deren Ebene angenähert tangential zur Stachelwalze (4) liegt.

## Claims

1. Interchangeable miniature-film magazine having a receiving means for a film cassette (3), having a sprocket (4) for the film advancement, having a winding drum (5) and having a shutter (6) for closing the film gate (8) provided in the magazine housing (7), **characterized in that**, with the film cassette inserted, the sprocket (4) is located immediately behind the cassette outlet (15), at a clear distance (a) which is smaller than the width of the film gate (8) across, it being the case that the unexposed film (13), previously, in the prewind operation, wound completely onto the winding drum (5), the winding direction of the film on the winding drum (5) being identical to that of the spool body of the film cassette (3), is guided from the winding drum (5), arranged closely alongside the film cassette (3), in a large radius around the receiving means for the film cassette (3) into the plane of the film gate (8), with a subsequent 180° deflection around the sprocket (4) into the cassette outlet (15).

2. Interchangeable miniature-film magazine according to Claim 1, **characterized in that** a film-intercepting device is provided in front of the winding drum (5).

3. Interchangeable miniature-film magazine according to Claim 1 or 2, **characterized in that** there is provided for the prewind operation a winding-drum drive which gives the winding drum (5) a higher circumferential speed than the sprocket (4), which is provided with a freewheel.

4. Interchangeable miniature-film magazine according to Claim 1, 2 or 3, **characterized in that**, for the purpose of transporting the film (13) back into the film cassette (3), it is merely the film cassette (3) that is driven.

5. Interchangeable miniature-film magazine according to one of the preceding claims, **characterized in that** there is provided immediately in front of the film gate (8), as seen in the winding direction of the film (13), a guide roller (18) which ensures that the film runs into the image plane without buckling, the film (13) being supported on a pressure plate (16) in said image plane.

6. Interchangeable miniature-film magazine according to Claim 5, **characterized in that** a pressure roller (17) is provided, along with the guide roller (18), immediately in front of the film gate (8).

7. Interchangeable miniature-film magazine according to Claim 5 or 6, **characterized in that** the sprocket (4) is located immediately behind the pressure plate (16), the plane of which is located approximately tangentially with respect to the sprocket (4).

## Revendications

1. Magasin échangeable pour films de petit format, comprenant une monture pour une cassette de film (3), un galet à picots (4) pour l'avancement du film, un mandrin d'enroulement (5) et un tiroir (6) pour obturer la fenêtre (8) prévue pour le film dans le boîtier (7) du magasin, **caractérisé en ce que** lorsque la cassette de film est installée, le galet à picots (4) se trouve directement après l'embouchure (15) de la cassette à une distance libre (a) plus petite que le format transversal de la fenêtre (8) pour le film, et **en ce que** pour le film (13) non exposé, d'abord complètement embobiné sur le mandrin d'enroulement (5) suivant le procédé du pré-enroulement, et dont le sens d'enroulement sur le mandrin d'enroulement (5) est identique à celui du corps d'enroulement de la cassette de film (3), le guidage du film à partir du mandrin d'enroulement (5) disposé tout à côté de 1a cassette de film (3) s'étend suivant un grand rayon autour de la monture pour la cassette de film (3) jusque dans le plan de la fenêtre pour le film (8), avec ensuite un renvoi à 180 degrés autour du galet à picots (4) jusque dans l'embouchure (15) de la cassette.

2. Magasin échangeable pour films de petit format selon la revendication 1, **caractérisé en ce qu'**il est prévu un dispositif de captage du film en avant du mandrin d'enroulement (5) .

3. Magasin échangeable pour films de petit format selon la revendication 1 ou 2, **caractérisé en ce qu'**il est prévu pour le procédé de pré-enroulement un entraînement de mandrin d'enroulement, qui donne au mandrin d'enroulement (5) une vitesse périphérique plus grande que celle du galet à picots (4) équipé d'une roue libre

4. Magasin échangeable pour films de petit format selon la revendication 1, 2 ou 3, **caractérisé en ce que** pour le retour du film (13) dans la cassette de film (3) la cassette de film (3) est seule à être soumise à un entraînement.

5. Magasin échangeable pour films de petit format selon l'une des revendications précédentes, **caractérisé en ce qu'**il est prévu juste devant la fenêtre (8) pour le film relativement à la direction d'enroulement du film (13) un galet de renvoi (18) pour que le film entre sans courbure dans le plan d'image, dans lequel le film (13) s'appuie sur un plaque presseuse (16).

6. Magasin échangeable pour films de petit format selon la revendication 5, **caractérisé en ce qu'**avec le galet de renvoi (18) il est prévu un galet d'appui (17) juste devant la fenêtre (8) pour le film.

7. Magasin échangeable pour films de petit format selon la revendication 5 ou 6, **caractérisé en ce que** le galet à picots (4) se trouve juste après la plaque presseuse (16), dont le plan s'étend à peu près tangentiellement au galet à picots (4) .
